# EUROPÄISCHE PATENTANMELDUNG

(11) **EP 1 376 152 A2**
(43) Veröffentlichungstag der Anmeldung: **02.01.2004**
(21) Anmeldenummer: 03007608.7
(22) Anmeldetag: 02.04.2003
(51) Int. Cl.: G01S 7/40

(54) **Verfahren und Vorrichtung zum Kalibrieren einer HF-Einrichtung**

(30) Priorität: 21.06.2002 DE 10227822
(71) Anmelder: ROBERT BOSCH GMBH, 70442 Stuttgart (DE)
(72) Erfinder: Toennesen, Tore, 72760 Reutlingen (DE); Haensel, Jens, 71229 Leonberg (DE); Steinbuch, Dirk, 71299 Wimsheim (DE)

(57) **Zusammenfassung**

Die vorliegende Erfindung stellt ein Verfahren zum Kalibrieren einer HF-Einrichtung bereit, mit den Schritten: Aufspalten eines Eingangssignals (10) in ein Sendeansteuersignal (11) und ein Empfangsansteuersignal (12); Verzögern des Sendeansteuersignals (11) in einer Verzögerungseinrichtung (13) zum Triggern eine Sendepulses (17); selektives Verzögern des Empfangsansteuersignals (12) in Abhängigkeit eines Verzögerungsinformationssignals (20) und/ oder eines Kalibrierungssignals (22) in einer steuerbaren Verzögerungseinrichtung (21) zum selektiven Triggern eines Empfangspulses (43); und Abtasten und Verarbeiten eines HF-Rohsignals (18) in das Verzögerungsinformationssignal (20) und/oder das Kalibrierungssignal (22) in einer Signalverarbeitungseinrichtung (19) zum Kalibrieren der HF-Einrichtung. Die vorliegende Erfindung stellt ebenfalls eine Vorrichtung zum Kalibrieren einer HF-Einrichtung bereit.

## Beschreibung

### STAND DER TECHNIK

Die vorliegende Erfindung betrifft ein Verfahren und eine Vorrichtung zum Kalibrieren einer HF-Einrichtung.

HF-Systeme werden heute vielfach für Messvorgänge, insbesondere Entfernungs- und Geschwindigkeitsmessungen von Objekten, eingesetzt. Eine besondere Bedeutung kommt dabei der Hochfrequenzmessung (Radar) rundum Fahrzeuge zu. Entfernungsmesseinrichtungen, die zur Erkennung von Entfernungen und Relativgeschwindigkeiten geeignet sind, werden insbesondere als Nahbereichs- Radarsysteme für Automobile vorgesehen. Hierzu wird eine Anzahl von Einzelsensoren an geeigneten Stellen um ein Automobil angeordnet.

Ein bekanntes Radar- Frontendsystem mit Namen SRR (Short Range Radar) arbeitet bei einer Frequenz von etwa 24 GHz und erlaubt Entfernungsbestimmungen durch Aussendung und Laufzeitbestimmung von HF-Pulsen, welche z. B. eine typische Breite von 400 ps aufweisen.

Ein übliches SRR System setzt eine Verzögerungsschaltung ein, die den Empfangspuls gegenüber dem Sendepuls gezielt zeitlich verzögert. Die Verzögerung, die der zu detektierenden Entfernungszelle entspricht, wird durch Anlegen eines vorbestimmten Spannungspegels eingestellt. Zur Vermessung des gesamten Entfernungsbereichs wird die Verzögerungsschaltung vom kleinsten zum größten Wert oder umgekehrt verstellt.

Die Genauigkeit mit der die Verzögerungsschaltung eingestellt werden kann, bestimmt maßgeblich die Entfernungsmessgenauigkeit. Für die Bestimmung des Winkels, unter dem ein Objekt insbesondere der Nähe eines Fahrzeugs erkannt werden kann, ist die Vermessung des Objektes mit mindestens zwei Einzelsensoren notwendig. Der Winkelwert kann durch Auswertung der gemessenen Einzelentfernungen mit Hilfe der Triangulation gewonnen werden. Entscheidend für die Winkelmessgenauigkeit ist daher auch die in den Einzelsensoren erzielbare Messgenauigkeit für die Entfernungsmessung.

Um die Messgenauigkeit beispielsweise eines SRR-Systems zu kalibrieren, bedarf es eines Nullabgleichs. Dieser Nullabgleich ist allerdings nur für eine Temperatur und unter identischen äußeren Montagebedingungen gültig. Ist ein solches System eingebaut besteht derzeit keine Möglichkeit das System nachzukalibrieren, woraus inakzeptable absolute Messfehler resultieren. Darüber hinaus ist die Übertragungsfunktion der Verzögerungseinrichtung bzw. -leitung nicht zwingend linear, d. h. selbst wenn man einen nahezu perfekten Nullabgleich erreicht, gilt dieser nur bei der/den Abgleichentfernung(en), da nicht interpoliert werden kann, wenn die Übertragungsfunktion nicht linear ist. Neben Temperatureffekten wirken sich auf ein solches HF-System zusätzlich Bauelementschwankungen und Alterungseffekte der eingesetzten Elemente nachteilig auf die Messgenauigkeit aus.

### VORTEILE DER ERFINDUNG

Das erfindungsgemäße Verfahren bzw. die erfindungsgemäße Vorrichtung zum Kalibrieren eine HF-Einrichtung mit den Merkmalen des Anspruchs 1 weist gegenüber dem bekannten Lösungsansatz den Vorteil auf, dass im Betrieb z. B. des SRR bei Bedarf ein Nullabgleich währen des Messzyklus durchführbar ist. Dadurch kann eine Nachkalibrierung des Systems erfolgen und die Messgenauigkeit kann gesteigert werden.

Die der vorliegenden Erfindung zugrundeliegende Idee besteht im Wesentlichen darin, dass man ein Radarsignal ausnützt, welches entsteht, wenn ein Sende- und ein Empfangsschalter gleichzeitig auf Durchgang geschaltet sind. Dann sieht das Radar sich selbst, also z. B. interne Verkopplungen und Antennenüberkopplungen, welche bei der Entfernung von 0 m bzw. bei dem definierten Abstand zwischen Sendeund Empfangseinrichtung auftreten. Diese reproduzierbare Entfernungsinformation des SRR umfasst die Laufzeiten der vollständigen Verzögerungskette, welche die Laufzeiten der Basisbandpulserzeuger, HF-Schalter und Antennen beinhaltet, womit sämtliche Einflüsse dieser Komponenten herauskalibriert werden können.

Erfindungsgemäß wird somit zum Kalibrieren einer HF-Einrichtung ein Eingangssignal in ein Sendeansteuersignal und ein Empfangsansteuersignal aufgespalten, das Sendeansteuersignal in einer Verzögerungseinrichtung zum Triggern eines Sendepulses verzögert, das Empfangsansteuersignal in Abhängigkeit eines Verzögerungsformationssignals und/oder eines Kalibrierungssignals in einer steuerbaren Verzögerungseinrichtung zum selektiven Triggern eines Empfangspulses selektiv verzögert, und ein HF-Rohsignal, insbesondere ein empfangenes Radarsignal, in das Verzögerungsinformationssignal und/oder das Kalibrierungssignal in einer Signalverarbeitungseinrichtung zum Kalibrieren der HF-Einrichtung abgetastet und verarbeitet.

In den Unteransprüchen finden sich vorteilhafte Weiterbildungen und Verbesserungen des in Anspruch 1 angegebenen Verfahrens bzw. der in Anspruch 10 angegebenen Vorrichtung zur Kalibrierung einer HF-Einrichtung.

Gemäß einer bevorzugten Weiterbildung wird in der Signalverarbeitungseinrichtung aus dem HF-Rohsignal in Abhängigkeit der vorliegenden Verzögerung des Sendeansteuersignals ein absoluter Nullpunkt und somit ein Offset der HF- Einrichtung ermittelt, bei welchem sowohl der Sendepuls als auch der Empfangspuls gleichzeitig aktiviert werden. Dies hat den Vorteil, dass die Laufzeit der gesamten Verzögerungskette bestimmbar wird und folglich sämtliche Einflüsse dieser Komponenten herauskalibriert werden können.

Gemäß einer weiteren bevorzugten Weiterbildung wird zum Ermitteln des absoluten Nullpunks das HF-Rohsignal differenziert, ein Schwellwert zur Bestimmung der Steigung einer Flanke des HF-Rohsignals bestimmt, und wenn der Schwellwert überschritten wird, wird an dieser Stelle der absolute Nullpunkt bzw. der Offset aus dem HF-Rohsignal bestimmt. Vorteilhaft an diesem Algorithmus ist, dass damit die von Sensor zu Sensor unterschiedlich ausfallenden Formen des Rohsignals trotz auftretender Variationen eine zuverlässige Nullpunktsinformation zuordnen kann.

Gemäß einer weiteren bevorzugten Weiterbildung wird auf Basis des ermittelten Nullpunkts bzw. des Offsets die selektive Verzögerung des Empfangsansteuersignals in der steuerbaren Verzögerungseinrichtung zur Kalibrierung bzw. zum Nullabgleich der HF-Einrichtung angepasst. Dies ermöglicht das eigentliche Herauskalibrieren der unerwünscht auftretenden Effekte wie z. B. die Temperaturabhängigkeit.

Gemäß einer weiteren bevorzugten Weiterbildung erfolgt die Kalibrierung über das Kalibrierungssignal, insbesondere ein Spannungssignal, welches einem Offsetsteuereingang der steuerbaren Verzögerungseinrichtung zugeführt wird. Dadurch wird es möglich den detektierten Offset nicht über das Verzögerungsinformationssignal zu steuern und damit den Scan-Bereich nicht einzuschränken, sondern die Offsetverstellung bzw. Nullpunktkalibrierung mittels des Kalibrierungssignals separat vorzunehmen.

Gemäß einer weiteren bevorzugten Weiterbildung ist das der steuerbaren Verzögerungseinrichtung zugeführte Verzögerungsinformationssignal ein Digitalwort, welches insbesondere eine Länge von 8 Bit aufweist. Dies hat den Vorteil, dass das in der Signalverarbeitungseinrichtung generierte Verzögerungsinformationssignal mit Hilfe eines Mikroprozessors bearbeitet werden kann.

Gemäß einer weitern bevorzugten Weiterbildung wird die Kalibrierung der HF-Einrichtung nach einer von außen detektierten vorbestimmten Temperaturänderung und/oder nach einem vorbestimmten Zeitintervall durchgeführt. Dadurch wird sichergestellt, dass die HF-Einrichtung vor allem bei kritischen Temperaturänderungen aber auch in gewissen zeitlichen Abständen nachkalibriert wird.

Gemäß einer weiteren bevorzugten Weiterbildung wird die selbstkalibrierende HF-Einrichtung zur Entfernungs- und / oder Geschwindigkeitsbestimmung von Objekten, insbesondere mit Nahbereichs-Pulsradar, eingesetzt. Dies birgt den Vorteil, dass aufgrund der Kalibrierungsmöglichkeit der HF-Einrichtung im Messeinsatz präzise, reproduzierbare Messergebnisse erzielt werden.

Gemäß einer weiteren bevorzugten Weiterbildung wird die Selbstkalibrierung der HF-Einrichtung bei und/oder vor jeder Entfernungsmessung der HF-Einrichtung durchgeführt. Dadurch wird eine permanente Nachkalibrierung der Anordnung ermöglicht.

Gemäß einer weiteren bevorzugten Weiterbildung sieht die Verzögerungseinrichtung eine statische Verzögerung vor, welche insbesondere eine Filtereinrichtung z. B. aus einem Widerstand und einem Kondensator besteht und/oder einen Pulsformer aufweist. Durch die somit bereitgestellte statische Verzögerung wird das Sendeansteuersignal vorteilhaft um eine bestimmte, bekannte Zeitperiode zeitlich verzögert sowie Sendepulse einer vorbestimmten Länge vorgesehen.

Gemäß einer weiteren bevorzugten Weiterbildung umfasst die Signalverarbeitungseinrichtung einen Prozessor, auf welchem ein Algorithmus zum Bestimmen eines Nullpunkts bzw. Offsets aus dem HF-Rohsignal abarbeitbar ist. Dies birgt den Vorteil der digitalen Datenverarbeitung und somit eine mögliche Miniaturisierung der Signalverarbeitungseinrichtung.

Gemäß einer weiteren bevorzugten Weiterbildung weist die steuerbare Verzögerungseinrichtung eine Digital / Analog Umwandlungseinrichtung zum Umwandeln des digitalen Verzögerungsinformationssignals in ein Analogsignal, insbesondere in ein analoges Spannungssignal, auf. Dadurch wird eine analoge Weiterverarbeitung des Verzögerungsinformationssignals in der steuerbaren Verzögerungseinrichtung ermöglicht.

Gemäß einer weiteren bevorzugten Weiterbildung weist die steuerbare Verzögerungseinrichtung einen Funktionsgenerator zum Erzeugen eines rampenförmigen Signals aus dem Empfangsansteuersignal in Abhängigkeit von dem Kalibrierungssignal auf. Dies ermöglicht die vorteilhafte Offset-Kalibrierung separat von der eigentlichen steuerbaren Verzögerung zum Erfassen des Scan-Bereichs.

Gemäß einer weiteren bevorzugten Weiterbildung weist die steuerbare Verzögerungseinrichtung einen Komparator, insbesondere einen TTL-Komparator, zum Vergleichen des rampenförmigen Signals mit dem Analogsignal und zum Ausgeben eines Vergleichssignals auf. Dadurch wird eine steuerbare Verzögerung des Empfangsansteuersignals sichergestellt.

Gemäß einer weiteren bevorzugten Weiterbildung sieht die steuerbare Verzögerungseinrichtung einen linearen Verzögerungsverlauf mit konstanter und bekannter Steigerung proportional zu dem Verzögerungsinformationssignal vor. Dies hat den Vorteil, dass durch Signalgrößenänderungen direkt proportionale, lineare Verzögerungen des Empfangsansteuersignals erzielt werden.

Gemäß einer weiteren bevorzugten Weiterbildung sind das Sendeansteuersignal und das Empfangsansteuersignal mit einer Pulswiederholfrequenz (PRF) beaufschlagte Rechtecksignale mit TTL-Pegeln, z. B. in einem Wiederholratenfrequenzbereich von 1 MHz bis 10 MHz. Dadurch werden für SSR-Systeme übliche Pulsmuster ermöglicht.

### ZEICHUNGEN

Ausführungsbeispiele der Erfindung sind in den Zeichnungen dargestellt und in der nachfolgenden Beschreibung näher erläutert.

Es zeigen:
- Fig. 1: ein schematisches Blockdiagramm zur Erläuterung einer Ausführungsform der vorliegenden Erfindung; und
- Fig. 2: ein Signalschaubild zur Erläuterung einer Funktionsweise einer Ausführungsform der vorliegenden Erfindung.

### BESCHREIBUNG DER AUSFÜHRUNGSBEISPIELE

In den Figuren bezeichnen gleiche Bezugszeichen gleiche oder funktionsgleiche Bestandteile.

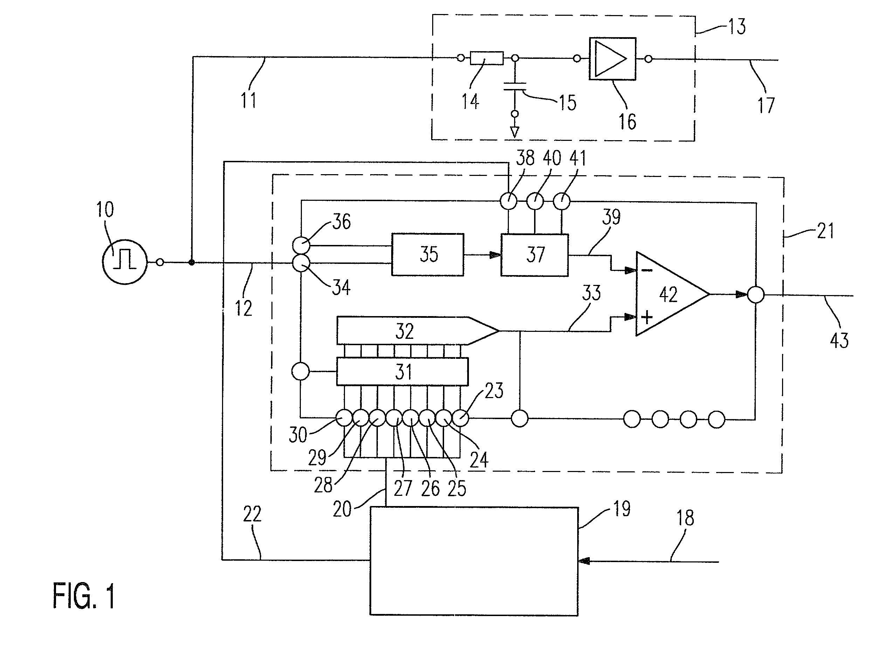

Figur 1 zeigt ein schematisches Blockdiagramm zur Erläuterung einer Ausführungsform der vorliegenden Erfindung.

In Figur 1 wird ein Eingangssignal 10, insbesondere ein Rechtecksignal, welches mit TTL-Pegeln und einer Pulswiederholfrequenz (PRF) beispielsweise zwischen 1 MHz und 10 MHz versehen ist, in ein Sendeansteuersignal 11 und Empfangsansteuersignal 12 aufgespaltet. Das Sendeansteuersignal 11 wird einer Verzögerungseinrichtung 13 zugeführt, welche insbesondere eine statische Verzögerung z. B. mittels einer Filtereinrichtung 14, 15 aus einem Widerstand 14 und einem mit einer Elektrode auf Masse gelegten Kondensator 15 vorsieht. Zur Pulsaufbereitung weist die Verzögerungseinrichtung 13 einen Pulsformer 16 auf, welcher Pulse z. B. einer Länge von 400 ps erzeugt. Die Verzögerungseinrichtung 13 gibt ein konstant verzögertes Sendeansteuersignal 17 zum Triggern eines Sendepulses aus.

Ein HF-Rohsignal 18, insbesondere ein empfangenes Radarrohsignal, wird einer Signalverarbeitungseinrichtung 19 zugeführt, in welcher das Radarrohsignal 18 erfasst und insbesondere mit Hilfe eines Algorithmus auf einem Digitalprozessor bearbeitet wird. In der Signalverarbeitungseinrichtung 19 wird aus dem HF-Rohsignal 18 ein Verzögerungsinformationssignal 20 erzeugt, welches einer steuerbaren Verzögerungseinrichtung 21 zugeführt wird. Ein in der Signalverarbeitungseinrichtung 19 optional erzeugtes Kalibrierungssignal 22 wird ebenfalls der steuerbaren Verzögerungseinrichtung 21 zugeführt.

Die steuerbare Verzögerungseinrichtung 21 verzögert das Empfangsansteuersignal 12 in Abhängigkeit von dem Verzögerungsinformationssignals 20, welches insbesondere ein Digitalwort z. B. mit einer Wortlänge von 8 Bit vorsieht, und/oder in Abhängigkeit von dem Kalibrierungssignal 22. Vorzugsweise stellt die steuerbare Verzögerungseinrichtung 21 einen linearen Verzögerungsverlauf mit bekannter, d. h. einstellbarer und konstanter Steigung bereit, wobei gilt, dass die tatsächliche Verzögerung, welche die steuerbare Verzögerungseinrichtung 21 generiert, proportional zu einer eingestellten Verzögerung verläuft, wobei sich der Proportionalitätsfaktor aufgrund von äußeren Einflüssen wie z. B. der Temperatur oder Bauteilschwankungen im Wesentlichen nicht ändert. Im Gegensatz zum konstant verzögerten Signal 17 zum Triggern eines Sendeschalters (nicht dargestellt) wird das Empfangsansteuersignal 12 durch die Verzögerungseinrichtung 21 und die externen angelegten Stellgrößen 20, 22 zeitlich gezielt verzögert.

Das Verzögerungsinformationssignal 20 wird z. B. als 8 bit Datenwort den Eingängen 23 bis 30 der steuerbaren Verzögerungseinrichtung 21 zugeführt. In der steuerbaren Verzögerungseinrichtung 21 wird das Verzögerungsinformationssignal 20 vorzugsweise mittels TTL-Latches 31 gespeichert, bevor das digitale Datenwort des Verzögerungsinformationssignals 20 in einem D/A-Wandler 32 in ein analoges Signal 33, vorzugsweise ein Spannungssignal umgewandelt wird.

Das Empfangsansteuersignal 12 wird der steuerbare Verzögerungseinrichtung 21 über einen Triggereingang 34 zugeführt und an eine Triggerschaltung 35 weitergeleitet, welche eingangsseitig ebenfalls mit einem Reseteingang 36 verbunden ist, über welchen die Triggerschaltung 35 rückstellbar ist. An die Triggerschaltung 35 schließt sich ein Funktionsgenerator 37 an, welcher in Abhängigkeit von dem über den Triggereingang 34 zugeführten Empfangsansteuersignalen 12 und dem Kalibrierungssignals 22, welches der steuerbaren Verzögerungseinrichtung 21 über einen Kalibrierungs- bzw. Offsetanpasseingang 38 eingegeben wird, vorzugsweise ein rampenförmiges Signal 39 erzeugt. Der Funktionsgenerator 37 bzw. die generierte Funktion ist vorzugsweise über zwei weitere Eingänge R_{SET} 40 und C_{EXT} 41 beeinflussbar.

Eine Vergleichseinrichtung, insbesondere ein TTL- Komparator, vergleicht das rampenförmige Signal 39 mit dem Analogsignal 33 und erzeugt ein selektiv verzögertes Empfangsansteuersignal 43, dessen Verzögerung proportional zum angelegten Verzögerungsinformationssignal 20 ist.

Da zum Herauskalibrieren der temperatur- und bauteilabhängigen Gesamtsignallaufzeit das empfangsseitige Triggersignal 12 relativ zum Triggersignal 11 des Sendezweiges verzögert werden muss, wird das Empfangsansteuersignal 12 variabel mit Hilfe der steuerbaren Verzögerungseinrichtung 21 vorzugsweise digital verzögert, während das Sendeansteuersignal 11 in der Verzögerungseinrichtung 13 fest verzögert wird.

Das Radar-Rohsignal 18 liefert die Information, wann bezogen auf die relative Verzögerung des Sendetriggers 17 der Nullpunkt auftritt, d. h. welche Zeitperiode verstreicht bis das Sendesignal einer Sendeeinrichtung als Empfangssignal/ welches über eine Empfangseinrichtung aufgenommen wird, auf direktem Wege, d. h. ohne an einem Objekt zu dessen Entfernungsbestimmung zu reflektieren, detektiert wird. Dieser Zeitpunkt lässt sich entweder z. B. durch ein 8 Bit Eingangswort 20 darstellen und kann für die weitere absolute Entfernungsberechnung verwendet werden oder direkt über das Kalibrierungssignal 22 der steuerbaren Verzögerungseinrichtung 21 zugeführt werden, so dass beispielsweise das digitale Datenwort 00000000 als Verzögerungsinformationssignal 20 auf den absoluten Entfernungsnullpunkt gesetzt wird.

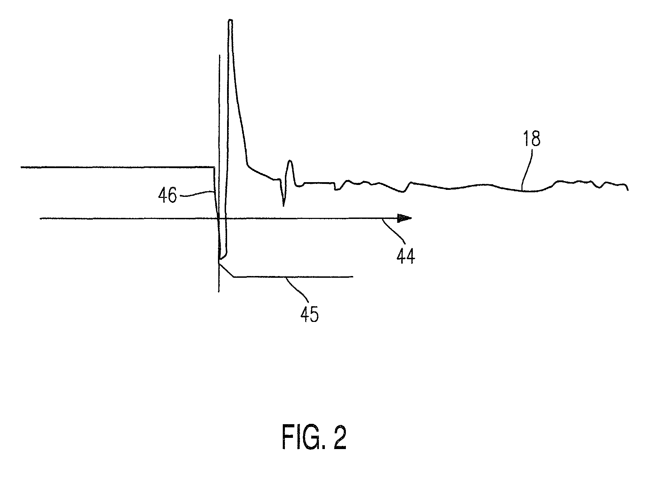

Figur 2 zeigt ein Signalschaubild zur Erläuterung der Funktionsweise einer Ausführungsform der vorliegenden Erfindung.

In Figur 2 ist das empfangene Radar- Rohsignal 18 über der Zeitachse t 44 dargestellt. Der Zeitpunkt 45 beschreibt das gleichzeitige Öffnen bzw. Aktivieren von Sende- und Empfangspuls. Da die Form des Rohsignals von Sensor zu Sensor unterschiedlich ausfallen kann, ist es notwendig, einen Algorithmus vorzusehen, der diesen Variationen eine zuverlässige Nullpunktinformation zuordnet.

Da insbesondere die Amplitude des Nullsignals und die Auslenkungsrichtung des ersten Schwingungsbauches unterschiedlich sind, bietet sich an, das Rohsignal 18 zu differenzieren und nur die jeweiligen Flanken 46 des Rohsignals 18 zu betrachten. Nimmt man dann den Betrag der Ableitung, so ist es nicht mehr relevant, ob zuerst eine positive oder negative Auslenkung des Signals erfolgt. In Messungen hat sich bestätigt, dass die Flankensteilheit der ersten Auslenkung gut reproduzierbar ist.

Zum detektieren des absoluten Entfernungsnullpunkts aus dem Radar-Rohsignal 18, um damit eine erfindungsgemäße HF-Einrichtung zu kalibrieren ist folgender Algorithmus, welcher in der Signalverarbeitungseinrichtung 19 nach Figur 1 abgearbeitet wird, vorgesehen: Differenziation des Rohsignals 18; Setzen einer Schwelle zur Bestimmung der Steigung der Flanke 46 des Rohsignals 18, Setzen des Nullpunktsindikators bei Überschreiten der Schwelle. Ein Offset dieses Indikators zum tatsächlichen Nullpunkt, bei der Sende- und Empfangsschalter gleichzeitig offen sind, wird messtechnisch einmal bestimmt und ist von Sensor zu Sensor im Wesentlichen konstant und wird bei der Kalibrierung mit eingerechnet.

Da jedem Amplitudenwert des Radar-Rohsignals 18 gemäß Figur 2 ein Zeitpunkt auf der Zeitachse 44 zugeordnet werden kann, ergibt sich ebenfalls eine Entfernungszuordnung aus dem Radar-Rohsignal 18. Das Scannen für die Kalibrierung erfolgt beginnend von negativen Entfernungen, wobei der in der Datenverarbeitungseinrichtung 19 nach Figur 1 ablaufende Algorithmus den ersten Peak im Ausgangssignal als Nullsignal erkennt und die exakte Position des Nullpunkts errechnet. Zeitlich früh auftretende Peaks sind physikalisch nicht möglich und die Zuordnung des Nullsignals folglich eindeutig. Der gemessene Offset bzw. die gemessene Zeitverzögerung wird gespeichert und sämtliche, im eigentlichen Mess-Scan detektierten Objekte werden damit korrigiert.

Der Kalibrierungs-Scan wird sinnvollerweise nach der Detektion einer Temperaturänderung von z. B. 5° C und/oder nach einem bestimmten Zeitintervall durchgeführt. Bei ausreichender Rechenleistung der Signalverarbeitungseinrichtung ist ebenfalls denkbar, dass die Kalibrierung und die Entfernungsmessung immer zusammen durchgeführt werden und somit immer von negativen Entfernungen beginnend gescannt wird, wobei die Entfernungen der detektierten Objekte im Mess-Scan mit einem dem Offset entsprechenden Nullsignal, welches für jeden Scan neu berechnet wird, korrigiert werden.

Der Nullpunkt, welcher bei gleichzeitigem Öffnen von Sendeund Empfangsschalter auftritt, liegt nicht notwendigerweise bei dem ersten, zweiten Peak oder dem Nulldurchgang.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Die Erfindung ist insbesondere nicht beschränkt auf die exemplarisch verwendete, steuerbare Verzögerungseinrichtung, welche einem Baustein der Firma Analog Devices (AD 9501) entspricht, sondern auch mit anderen Bausteinen z.B. ASICs ähnlicher Eigenschaften realisierbar.

## Patentansprüche

1. Verfahren zum Kalibrieren einer HF-Einrichtung mit den Schritten:
Aufspalten eines Eingangssignals (10) in ein Sendeansteuersignal (11) und ein Empfangsansteuersignal (12);
Verzögern des Sendeansteuersignals (11) in einer Verzögerungseinrichtung (13) zum Triggern eine Sendepulses (17);
selektives Verzögern des Empfangsansteuersignals (12) in Abhängigkeit eines Verzögerungsinformationssignals (20) und/ oder eines Kalibrierungssignals (22) in einer steuerbaren Verzögerungseinrichtung (21) zum selektiven Triggern eines Empfangspulses (43); und
Abtasten und Verarbeiten eines HF-Rohsignals (18) in das Verzögerungsinformationssignal (20) und/oder das Kalibrierungssignal (22) in einer Signalverarbeitungseinrichtung (19) zum Kalibrieren der HF-Einrichtung.

2. Verfahren nach Anspruch 1,
**dadurch gekennzeichnet,**
**dass** in der Signalverarbeitungseinrichtung (19) aus dem HF- Rohsignal (18) in Abhängigkeit der vorliegenden Verzögerung des Sendeansteuersignals (17) ein absoluter Nullpunkt und somit ein Offset der HF-Einrichtung ermittelt wird, bei welchem sowohl der Sendepuls (17) als auch der Empfangspuls (43) gleichzeitig aktiviert werden.

3. Verfahren nach Anspruch 2,
**dadurch gekennzeichnet,**
**dass** zum Ermitteln des absoluten Nullpunkts das HF-Rohsignal (18) differenziert wird, ein Schwellwert zur Bestimmung der Steigung einer Flanke (46) des HF- Rohsignals (18) bestimmt wird, und wenn dieser Schwellwert überschritten wird an dieser Stelle der absolute Nullpunkt bzw. der Offset aus dem HF- Rohsignal (18) bestimmt wird.

4. Verfahren nach einem der vorangehenden Ansprüche 2 oder 3,
**dadurch gekennzeichnet,**
**dass** auf Basis des ermittelten Nullpunktes bzw. des Offsets die selektive Verzögerung des Empfangsansteuersignals (12) in der steuerbaren Verzögerungseinrichtung (21) zur Kalibrierung bzw. zum Nullabgleich der HF-Einrichtung angepasst wird.

5. Verfahren nach Anspruch 4,
**dadurch gekennzeichnet,**
**dass** die Kalibrierung über das Kalibrierungssignal (22), insbesondere ein Spannungssignal, erfolgt, welches einem Offsetsteuereingang (38) der steuerbaren Verzögerungseinrichtung (21) zugeführt wird.

6. Verfahren nach einem der vorangehenden Ansprüche,
**dadurch gekennzeichnet,**
**dass** das der steuerbaren Verzögerungseinrichtung (21) zugeführte Verzögerungsinformationssignal (20) ein Digitalwort ist, welches insbesondere eine Länge von 8-bit aufweist.

7. Verfahren nach einem der vorangehenden Ansprüche,
**dadurch gekennzeichnet,**
**dass** die Kalibrierung der HF-Einrichtung nach einer von außen detektierten vorbestimmten Temperaturänderung und/oder nach einem vorbestimmten Zeitintervall durchgeführt wird.

8. Verfahren nach einem der vorangehenden Ansprüche,
**dadurch gekennzeichnet,**
**dass** die selbstkalibrierende HF-Einrichtung zur Entfernungs- und/oder Geschwindigkeitsbestimmung von Objekten, insbesondere mit einem Nahbereichs Pulsradar, eingesetzt wird.

9. Verfahren nach Anspruch 8,
**dadurch gekennzeichnet,**
**dass** die Selbstkalibrierung der HF-Einrichtung bei und/oder vor jeder Entfernungsmessung der HF-Einrichtung durchgeführt wird.

10. Vorrichtung zur Kalibrierung einer HF-Einrichtung mit:
einer Verzögerungseinrichtung (13) zum Verzögern eines Sendeansteuersignals (11) zum Triggern eine Sendepulses (17);
einer steuerbaren Verzögerungseinrichtung (21) zum selektiven Verzögern eines Empfangsansteuersignals (12) in Abhängigkeit eines Verzögerungsinformationssignals (20) und/ oder eines Kalibrierungssignals (22) zum selektiven Triggern eines Empfangspulses (12); und
einer Signalverarbeitungseinrichtung (19) zum Abtasten und zum Verarbeiten eines HF-Rohsignals (18) in das Verzögerungsinformationssignal (20) und/oder das Kalibrierungssignal (22) zum Kalibrieren der HF-Einrichtung.

11. Vorrichtung nach Anspruch 10,
**dadurch gekennzeichnet,**
**dass** die Verzögerungseinrichtung (13) eine statische Verzögerung vorsieht, welche insbesondere eine Filtereinrichtung (14, 15) z. B. aus einem Widerstand (14) und einem Kondensator (15) und/oder einen Pulsformer (16) aufweist.

12. Vorrichtung nach einem der vorangehenden Ansprüche 10, 11,
**dadurch gekennzeichnet,**
**dass** die Signalverarbeitungseinrichtung (19) einen Prozessor aufweist, auf welchem ein Algorithmus zum Bestimmen eines Nullpunkts bzw. Offsets aus dem HF-Rohsignal abarbeitbar ist.

13. Vorrichtung nach einem der vorangehenden Ansprüche 10 bis 12,
**dadurch gekennzeichnet,**
**dass** die steuerbare Verzögerungseinrichtung (21) mindestens einen Eingang (23 bis 30) zum Zuführen des Verzögerungsinformationssignals (20) aufweist, welches insbesondere digital in einer TTL- Latch- Speichereinrichtung (31) speicherbar ist.

14. Vorrichtung nach einem der vorangehenden Ansprüche 10 bis 13,
**dadurch gekennzeichnet,**
**dass** die steuerbare Verzögerungseinrichtung (21) eine digital/analog Umwandlungseinrichtung (32) zum Umwandeln des digitalen Verzögerungsinformationssignals (20) in ein Analogsignal (33), insbesondere ein analoges Spannungssignal, aufweist.

15. Vorrichtung nach einem der vorangehenden Ansprüche 10 bis 14,
**dadurch gekennzeichnet,**
**dass** die steuerbare Verzögerungseinrichtung (21) einen Funktionsgenerator (37) zum Erzeugen eines rampenförmigen Signals (39) aus dem Empfangsansteuersignal (12) in Abhängigkeit von dem Kalibrierungssignal (22) aufweist.

16. Vorrichtung nach Anspruch 15,
**dadurch gekennzeichnet,**
**dass** die steuerbare Verzögerungseinrichtung (21) eine Vergleichseinrichtung (42), insbesondere einen TTL-Komparator, zum Vergleichen des rampenförmigen Signals (39) mit dem Analogsignal (33) und zum Ausgeben eines Vergleichssignals (43) aufweist.

17. Vorrichtung nach einem der vorangehenden Ansprüche 10 bis 16,
**dadurch gekennzeichnet,**
**dass** die steuerbare Verzögerungseinrichtung (21) einen linearen Verzögerungsverlauf mit konstanter und bekannter Steigung proportional zu dem Verzögerungsinformationssignal (20) vorsieht.

18. Vorrichtung nach einem der vorangehenden Ansprüche 10 bis 17,
**dadurch gekennzeichnet,**
**dass** die Vorrichtung in einem System zum Bestimmen des Abstandes und/oder der Geschwindigkeit eines Objektes, insbesondere mit einem Nahbereichs Pulsradar, vorgesehen ist.

19. Vorrichtung nach einem der vorangehenden Ansprüche 10 bis 18,
**dadurch gekennzeichnet,**
**dass** das Sendeansteuersignal (11) und das Empfangsansteuersignal (12) mit einer Pulswiederholfrequenz (PRF) beaufschlagte Rechtecksignale mit TTL-Pegeln, z.B. in einem Wiederholratenfrequenzbereich von 1 MHz bis 10 MHz, sind.
